# EUROPEAN PATENT SPECIFICATION

(11) **EP 4 020 852 B1**
(45) Date of publication and mention of the grant of the patent: **23.07.2025**
(21) Application number: 21200289.3
(22) Date of filing: 30.09.2021
(51) Int. Cl.: B60K 35/10, B60K 35/22, B60K 35/26, B60K 35/28, B60K 35/80, B60K 35/85, H04B 11/00

(54) **REMOTE CONTROLLER, COMMUNICATION-ENVIRONMENT SENDING DEVICE, COMMUNICATION-ENVIRONMENT CHECK METHOD, AND COMMUNICATION-ENVIRONMENT SENDING METHOD**
FERNSTEUERUNG, KOMMUNIKATIONSUMGEBUNGSSENDEVORRICHTUNG, KOMMUNIKATIONSUMGEBUNGSPRÜFVERFAHREN UND KOMMUNIKATIONSUMGEBUNGSSENDEVERFAHREN
COMMANDE À DISTANCE, DISPOSITIF D'ENVOI D'ENVIRONNEMENT DE COMMUNICATION, PROCÉDÉ DE CONTRÔLE D'ENVIRONNEMENT DE COMMUNICATION, ET PROCÉDÉ D'ENVOI D'ENVIRONNEMENT DE COMMUNICATION

(30) Priority: 22.12.2020 JP 2020212384
(43) Date of publication of application: 29.06.2022
(73) Proprietor: Suzuki Motor Corporation, Shizuoka 432-8611 (JP)
(72) Inventor: MIURA, Shin, Hamamatsu-shi, 432-8611 (JP)
(74) Representative: Haseltine Lake Kempner LLP

(56) References cited:
- US-A1- 2015 350 413
- US-A1- 2019 378 515
- US-B2- 10 843 524

## Description

### BACKGROUND OF THE INVENTION

### Field of the Invention

The present invention relates to a quality checking technique for ultrasonic communication to be performed between a target in-vehicle device and a control terminal.

### Description of the Related Art

In recent years, technology has been developed for a driver in a traveling vehicle to remotely control target in-vehicle devices such as an air conditioner and a navigation system with the use of a portable terminal and/or a remote controller (hereinafter, collectively referred to as a "control terminal"). Radio wave communication or infrared communication is often used as a means of the communication between the target in-vehicle device and the control terminal, in addition to ultrasonic communication using ultrasonic waves.

Note that ultrasonic waves are susceptible to radio disturbance when disturbance such as an environmental sound occurs in the inaudible sound range (about 18 kHz or more) to be used for the ultrasonic communication. For example, the sound of rubbing a vinyl bag contains a frequency component in the inaudible range, and such a sound deteriorates the communication quality of the ultrasonic communication. Patent Document 1 (JP 2015-063284 A) discloses conventional technique.

In order for the user to check whether the contents of the ultrasonic communication are correctly received by the receiving terminal or not, there is a demand for technology to visualize the communication quality of the ultrasonic signal by displaying, for example, an icon.

In particular, due to the characteristics of ultrasonic waves, the communication quality of the ultrasonic communication changes from moment to moment depending on the environment around the vehicle, as exemplified by the traffic conditions at that time, the outside temperature, the weather, and the driving mode. Thus, it is preferred that the display of communication quality also reflects change in communication environment immediately and accurately.

US 2015/350413 A1 relates to a mobile terminal and method for controlling the same. US 2019/378515 A1 relates to a dialogue system, vehicle and method for controlling the vehicle.

### SUMMARY OF THE INVENTION

The present invention is defined in the appended independent claims. Further preferred embodiments are defined in the dependent claims. An object of the present invention is to provide a remote controller, a communication-environment sending device, a communication-environment check method, and a communication-environment sending method, each of which can keep the display of communication quality accurately reflecting change in communication environment of the ultrasonic communication.

A communication-environment sending device according to an aspect of the present invention includes a detector, an in-vehicle controller, and a sender. The detector is provided in a vehicle and acquires information related to noise sound in the vehicle. The in-vehicle controller is provided in the vehicle and converts the information related to noise sound into an environment notification signal. The sender sends the environment notification signal to a remote controller disposed in the vehicle. The in-vehicle controller is configured to make the sender send the environment notification signal when a vehicle parameter of the vehicle changes within a predetermined range or in a predetermined manner.

A remote controller according to an aspect of the present invention includes a speaker, an information receiver, a controller, a display, and a memory. The speaker sends an ultrasonic signal that controls an operation of an in-vehicle device. The information receiver detects information related to noise sound inside a vehicle. The controller calculates a propagability index of the ultrasonic signal from the information related to noise sound. The display displays the propagability index as communication quality level of the ultrasonic signal. The memory stores a provision regarding an operable state. The controller is configured to calculate the propagability index when the remote controller shifts to the operable state.

A communication-environment check method that controls an operation of an in-vehicle device by an ultrasonic signal, the communication-environment check method according to an aspect of the present invention includes a receiving step, a calculating a propagability step, a displaying step, and a calculating an operable state step. At the receiving step, information related to noise sound in a vehicle is received. At the calculating the propagability step, the propagability index of the ultrasonic signal from the information related to noise sound is calculated. At the displaying step, the propagability index as a communication quality level of the ultrasonic signal is displayed. At the calculating the operable state step, the propagability index when a state of the in-vehicle device changes to the predetermined operable state is calculated.

A communication-environment sending method achieved by cooperating with a remote controller disposed in a vehicle, and the communication-environment sending method according to an aspect of the present invention includes an acquiring step, a converting step, and a sending step. At the acquiring step, information related to noise sound in the vehicle is acquired. At the converting step, the information related to noise sound into an environment notification signal are converted. At the sending step, the environment notification signal is sent to the remote controller disposed in the vehicle when a vehicle parameter in the vehicle is changed within a predetermined range or in a predetermined manner.

The present invention provides a remote controller, a communication-environment sending device, a communication-environment check method, and a communication-environment sending method, each of which can keep the display of communication quality accurately reflecting change in communication environment of the ultrasonic communication.

### BRIEF DESCRIPTION OF THE DRAWINGS

In the accompanying drawings:
Fig. 1 is a conceptual configuration diagram illustrating a vehicle in which the remote controller according to the first embodiment and target in-vehicle devices are installed;
Fig. 2A and Fig. 2B are schematic diagrams illustrating a smartphone that is one aspect of the remote controller according to the first embodiment;
Fig. 3 is a schematic view of the inside of the vehicle provided with the communication-environment sending device according to the first embodiment and the target in-vehicle devices, when viewed from the roof side;
Fig. 4 is a schematic view of the periphery of an inner panel provided with the communication-environment sending device according to the first embodiment;
Fig. 5 is a flowchart illustrating an operation of the remote controller and the communication-environment sending device according to the first embodiment; and
Fig. 6 is a flowchart illustrating the operation of the remote controller according to the second embodiment.

### DETAILED DESCRIPTION

Hereinbelow, embodiments of the present invention will be described by referring to the accompanying drawings.

### (First Embodiment)

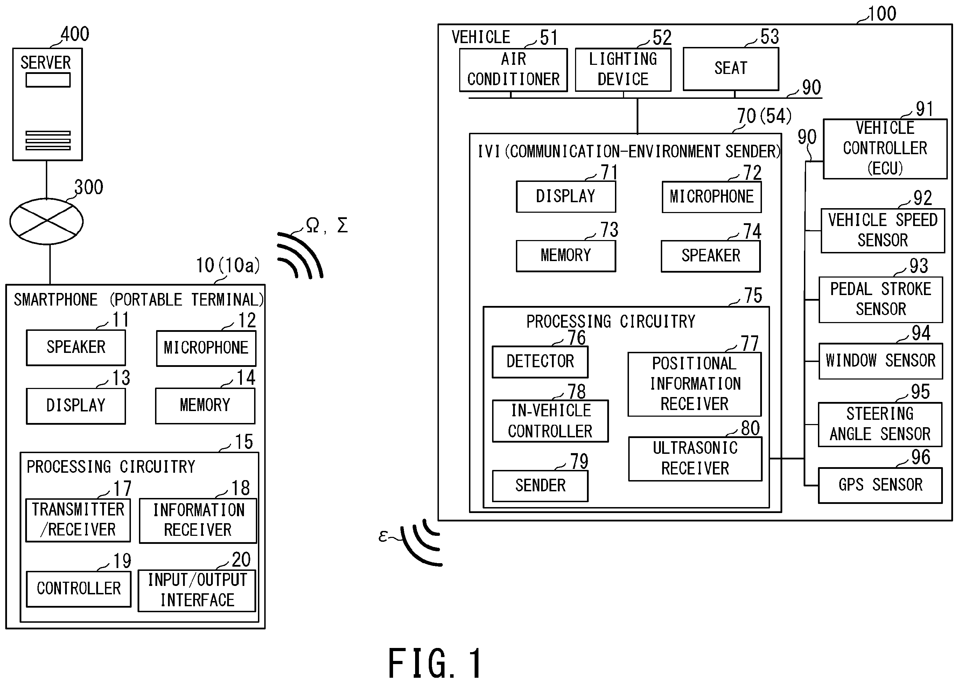

First, a description will be given of a remote controller 10 and in-vehicle devices 51, 52, 53, and 54 (hereinafter, referred to as "target in-vehicle devices 51 to 54"), which are operated by this remote controller 10 with the use of an ultrasonic signal Ω, by referring to Fig. 1 to Fig. 4.

Fig. 1 is a conceptual configuration diagram illustrating a vehicle 100 in which the remote controller 10 according to the first embodiment and the target in-vehicle devices 51 to 54 are installed.

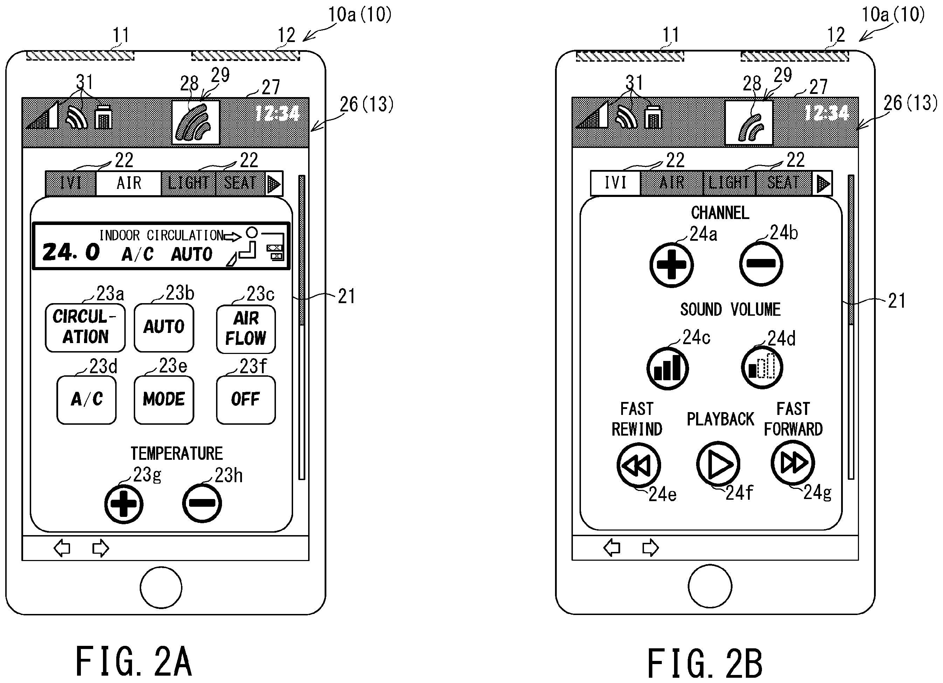

Fig. 2A and Fig. 2B are schematic diagrams illustrating a smartphone 10a that is one aspect of the remote controller 10 according to the first embodiment.

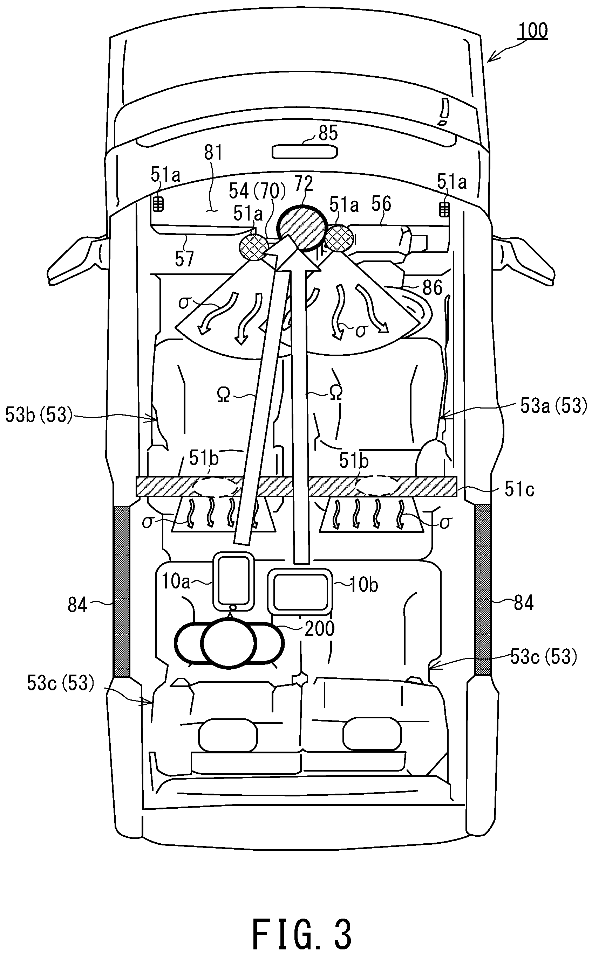

Fig. 3 is a schematic view of the inside of the vehicle 100 provided with a communication-environment sending device 70 (hereinafter, simply referred to as "the sending device 70") according to the first embodiment and the target in-vehicle devices 51 to 54, when viewed from the roof side.

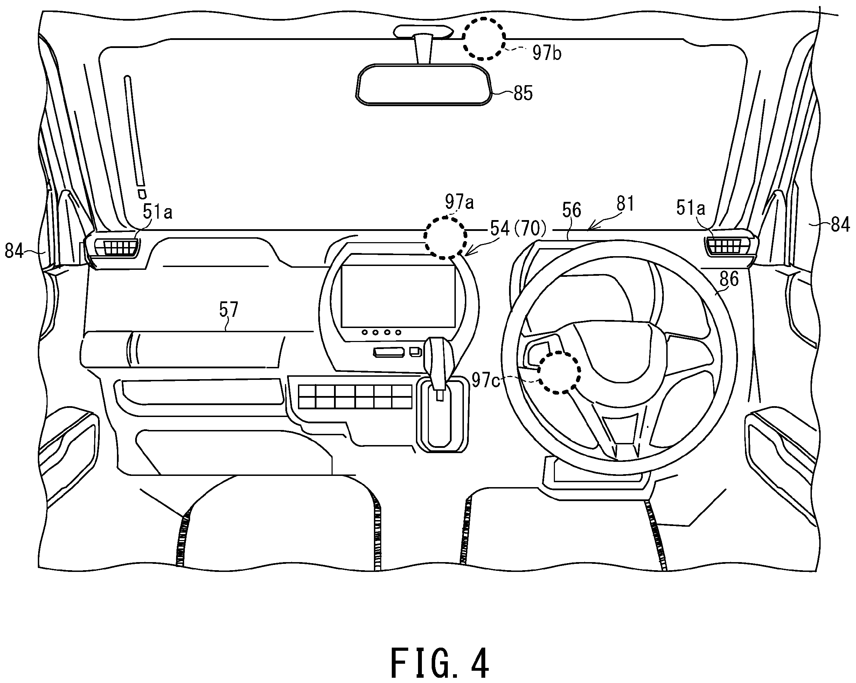

Fig. 4 is a schematic view of the periphery of an inner panel 81 provided with the sending device 70 according to the first embodiment.

### <Remote Controller 10>

The remote controller 10 is a portable terminal (i.e., mobile terminal) 10a owned by a user 200, as exemplified by a smartphone shown in Fig. 2A and Fig. 2B.

The remote controller 10 may also be a PC (Personal Computer), a wearable device, a public terminal, a specially designed and manufactured remote controller, and/or an in-vehicle operation terminal 10b installed around the rear seat 53c.

In the following embodiments, a description will be given of a case where the smartphone (i.e., portable terminal) 10a is used as the remote controller 10 by installing an application program developed for remote control in the smartphone 10a.

The remote controller 10 includes a speaker 11, a microphone 12, a display 13, a memory 14, and processing circuitry 15 as shown in Fig. 1.

The memory 14 is configured as, for example, a ROM (Read Only Memory), a RAM (Random Access Memory), and/or an HDD (Hard Disk Drive).

The processing circuitry 15 implements respective functions of a transmitter/receiver 17, an information receiver 18, a controller 19, and an input/output interface 20 by executing the programs stored in the memory 14.

The transmitter/receiver 17 transmits an ultrasonic signal Ω (hereinafter, referred to as "the control signal Ω") which controls the operation of the target in-vehicle devices 51 to 54 via the speaker 11. The speaker 11 may be an existing speaker provided for audio or may be a dedicated speaker separately provided for ultrasonic communication. The target in-vehicle devices 51 to 54 to be remotely controlled by this control signal Ω are, for example, an air conditioner 51, a lighting device 52, a seat 53, and an IVI (In-Vehicle Infotainment) 54. The target in-vehicle devices are not particularly limited to the above aspects as long as they are electronically controllable in-vehicle accessories such as a locking mechanism of a door opening/closing lever, an in-vehicle camera, a conventional navigation system, and an audio device.

The IVI 54 is, for example, a system that provides various functions such as a navigation function, a location information service function, a multimedia reproduction function of music and video, a voice communication function, a data communication function, and an Internet connection function in a complex manner.

The IVI 54 will be described in detail in the description of the vehicle 100 described below.

Each of the target in-vehicle devices 51 to 54 is connected by a communication network 90 in the vehicle such as a CAN (Controller Area Network) and a LIN (Local Interconnect Network). For example, the IVI 54 is provided with an ultrasonic receiver 79, and the ultrasonic receiver 79 receives the control signal Ω emitted by the remote controller 10. Further, the IVI 54 serves as a repeater (i.e., relay device) so as to transmit an operation instruction to the target in-vehicle devices 51 to 54 via the communication network 90.

The entire system may be configured such that each of the target in-vehicle devices 51 to 54 is provided with its own ultrasonic receiver 79 and is directly and remotely controlled by the remote controller 10a so as to exert its function. In response to remote control, for example, in the case of the multimedia reproduction function of the IVI 54, the functions of start, stop, volume increase/decrease, media reproduction, fast-forward or fast-rewind are executed.

In the following, a description will be given of a case where the IVI 54 is used as the representative device of the target in-vehicle devices and a microphone 72 capable of detecting ultrasonic waves is provided on the display 71 of the IVI 54. Normally, the display 71 of the IVI 54 is disposed between the driver's seat 53a and the passenger seat 53b on the inner panel 81 as shown in Fig. 3 and Fig. 4, i.e., between the speedometer 56 and the dashboard 57.

The command of the ultrasonic communication may be acquired from a server 400 connected by the Internet 300. In addition, the entire system may be configured such that basic commands are stored and provided by the memories 14 and 73 of the respective devices 10 and 70 and additional commands are acquired from the server 400.

Returning to the description of transmitter/receiver 17, the transmitter/receiver 17 also sends a notification request signal Σ to the sending device 70 when the portable terminal 10a is changed to an operable state.

The notification request signal Σ is a signal that requests the portable terminal 10a to transmit an environment notification signal ε. This environment notification signal ε is a signal in which information related to noise sound (hereinafter, referred to as "noise-related information") is included.

The operable state is defined in advance and stored in the memory 14 as a state in which the target in-vehicle devices 51 to 54 may be remotely controlled by the portable terminal 10a.

For example, the operable state is defined as a state in which the operation restriction of the portable terminal 10a is released, a state in which the display 13 is ON, a state in which the remote-control application is started, or a state in which the orientation of the portable terminal 10a matches a predetermined orientation.

For example, even when the remote-control application is running in the background, the portable terminal 10a is placed in the bag or the pocket of the cloth of the user in some cases. If the environment notification signal ε is received when the user 200 does not need it, the charge of the portable terminal 10a is wasted. For this reason, the environment notification signal ε is sent to check the communication quality when the portable terminal 10a shifts to the operable state, and thereby, battery usage of the portable terminal 10a is suppressed. Although many timings may be included as the timings of sending the environment notification signal ε, at least one of the sending timings may be defined as a timing in the operable state. For example, every time the operation page 21 of the remote-control application changes from the inactive state to the active state, the sending device 70 is requested to send the environment notification signal ε.

The noise-related information is information on disturbance that hinders the ultrasonic communication, as exemplified by the traveling speed (i.e., velocity) of the vehicle 100, the traveling acceleration of the vehicle 100, the operating mode of the motor, the operating mode of the engine, the opening degree of the window 84, and the air-flow volume of the air conditioner 51.

For example, in the vehicle 100 as shown in Fig. 3, an air outlet 51a for the front-seat air conditioner is provided around the inner panel 81 and an air outlet 51b for the rear-seat air conditioner is provided in the center of the roof.

The conditioned air σ blown from these air outlets 51a and 51b flows between the IVI 54 and the portable terminal 10a held by the user 200 seated in the rear seat 53c.

A temperature interface is formed at the boundary between the conditioned air σ and the surrounding air due to the temperature difference. When the control signal Ω enters this temperature interface, it reflects and refracts at the temperature interface and is disturbed by the convection generated by the conditioned air σ. Thus, the conditioned air σ is considered to have a great influence on the ultrasonic communication.

Further, when the air conditioner 51 is operated, the operating sound of the air conditioner 51 is also generated, as exemplified by the motor sound and the sound of conditioned air σ that contacts the fins of the air outlets 51a and 51b at the time of blowing out of the air outlets 51a and 51b. Since these operating sounds may include ultrasonic waves that cause disturbance in the frequency band to be used for the control signal Ω, such an operating sound of an in-vehicle device is also included in the noise-related information.

Ultrasonic waves can also be generated from, for example, the inflow and outflow of air due to opening of the window 84, the opening and closing sound of the window 84, and the switching noise to be generated from the driving source of the vehicle 100 and the battery. Since these noises may also hinder the ultrasonic communication, such noises are also included in the noise-related information.

The transmitter/receiver 17 transmits the notification request signal Σ so as to make the sending device 70 send the environment notification signal ε in which such noise-related information is included.

The information receiver 18 receives the environment notification signal ε from the sending device 70 and acquires the noise-related information detected by the sending device 70.

It is also preferred that the information receiver 18 itself acquires the noise sound around the portable terminal 10a as the noise-related information via the microphone 12.

Even in the case where the microphone 12 cannot detect ultrasonic waves, when a special learning method such as machine learning is applied to the information receiver 18 for learning how to estimate ultrasonic waves from the operating sound, the information receiver 18 can estimate the ultrasonic components with high accuracy by using the existing microphone 12.

The controller 19 uses the acquired noise-related information to calculate degree of smoothness of wireless communication (i.e., probability of successfully transmitting the wireless signal to the receiving side in terms of disturbance factors, and hereinafter, referred to as a "propagability index") for the control signal Ω.

For example, when the blowing noise is loud, it can be estimated that the air circulation inside the vehicle is strong and the propagability index of the control signal Ω is low. When the ultrasonic wave contained in this blowing noise has a frequency far from the frequency of the control signal Ω, the influence on the propagability index is small.

The display 13 is, for example, a touch panel having both of an input device for inputting data according to an action of the user 200 and a display device such as a liquid crystal display device for displaying data.

As shown in Fig. 2A and Fig. 2B, for example, the operation page 21 of "IVI", "air conditioner", "lighting", and "seat" are displayed on the display 13 in a switchable manner by the tab 22e.

For example, Fig. 2A illustrates the operation page 21 for operating the air conditioner 51, and Fig. 2B illustrates the operation page 21 for operating the IVI 54. On the operation page 21 of the air conditioner 51 in Fig. 2A, the air conditioner 51 is adjusted by remote operation with the use of eight buttons 23a to 23h such as a circulation switching button 23a, an AUTO button 23b, an air-flow volume button 23c, and a compressor drive button 23d.

When the tab 22 of "IVI" is touched, the screen is switched to the operation page 21 of the IVI 54 of Fig. 2B, and the IVI 54 is remotely controlled with the use of various buttons 24a to 24g such as the channel buttons 24a and 24b.

Although it is not shown, the brightness adjustment and ON/OFF of the lighting device 52 are remotely controlled. For the seat 53, the reclining angle adjustment and the front-rear position adjustment are remotely controlled.

On the status bar 27 at the upper end of the display 13 (i.e., display screen 26), various icons 31 indicating the remaining battery level of the portable terminal 10a and the state of the radio field strength for wireless communication are displayed.

In the portable terminal 10a according to the first embodiment, the display 13 displays the calculated propagability index as the communication quality level of the control signal Ω, for example, on the status bar 27.

The communication quality level is represented in four stages by zero to three arcs 28 as shown in Fig. 2A and Fig. 2B, for example.

When the communication environment of the control signal Ω is satisfactory and the propagability index is high, three arcs 28 are displayed by the icon 31 as shown in Fig. 2A. When the propagability index declines by one level from the state of Fig. 2A, two arcs 28 are displayed as shown in Fig. 2B.

The display format of the communication quality level is not limited to the fan-shaped icon 31 in which the arcs 28 shown in Fig. 2A and Fig. 2B are arranged concentrically, and the communication quality level may be represented by, for example, the number of antenna bars or numbers.

The display position of the communication quality level is not particularly limited to the status bar 27, and may be anywhere on the display 13 (i.e., display screen 26) as long as the user 200 can visually recognize it.

In accordance with the propagability index, notification of specific actions for improving the propagability index may be given to the user 200. In detail, the display 13 may display instruction words such as "Please direct the portable terminal toward the in-vehicle receiver" and/or "Please bring the portable terminal closer to the in-vehicle receiver". Instead of displaying the notification on the display screen 26, the notification may be made by voice, and the notification aspect is not limited to a specific method. When the specific action is notified in this manner, the user can grasp that the communication quality level is low and can also take specific measures to raise the communication quality level by himself/herself.

Since the portable terminal 10a has such a communication environment checking function, the user 200 can check the communication quality level on the remote controller 10 before or during the remote control and can grasp whether the ultrasonic communication can be used or not.

### <Vehicle 100>

Next, a description will be given of the sending device 70, which cooperates with the remote controller 10, and the vehicle 100 provided with this sending device 70 by referring to Fig. 3 and Fig. 4.

The vehicle 100 is provided with a vehicle controller (i.e., ECU or Electronic Control Unit) 91, various sensors 92 to 96, the IVI 54, and the target in-vehicle devices 51 to 54.

These devices 91 to 96 are interconnected by the communication network 90 to exchange information.

The ECU 91 is configured as a plurality of in-vehicle computers provided in various places in the vehicle 100, and has, for example, an engine control function, a handle control function, a brake control function, and a data security function. For example, the ECU 91 for brake control receives information on the operation of the accelerator pedal and the brake pedal and the running speed via the pedal stroke sensor 93 and the vehicle speed sensor 92, converts the received information into a vehicle controlling signal, and applies driving force or braking force to the front wheels or the rear wheels by the vehicle controlling signal.

The IVI 54 includes an in-vehicle microphone 72, an in-vehicle memory 73, an in-vehicle speaker 74, and in-vehicle processing circuitry 75.

In the description of the IVI 54, in order to distinguish the IVI 54 from the components of the portable terminal 10a (i.e., the speaker 11, the microphone 12, the display 13, the memory 14, and the processing circuitry 15), the term "in-vehicle" is added to the beginning of each component name of the IVI 54 as required.

The above-described display 71 of the IVI 54 is, for example, a touch panel having both of an input device for inputting data according to the operation by the user 200 and a display device such as a liquid crystal display for displaying data.

The in-vehicle memory 73 is composed of, for example, a ROM, a RAM, or an HDD.

When the in-vehicle processing circuitry 75 executes and processes instructions on the basis of the programs stored in the in-vehicle memory 73, the IVI 54 implements various functions such as the above-described navigation function and location information service function.

As described above, the plurality of air outlets 51a and 51b of the air conditioner 51 are provided in the vehicle 100 so as to be positioned appropriately with respect to the target to which the conditioned air σ is sent.

The air outlet 51a provided for the front seats 53a and 53b is near the display 71 of the IVI 54 while being far from the rear seat 53c. Thus, even when the conditioned air σ is blown from the air outlet 51a, the conditioned air σ is not sufficiently detected by the portable terminal 10a of the user 200 seated in the rear seat 53c. However, even when it is not detected by the portable terminal 10a, this conditioned air σ forms a temperature interface near the IVI 54 and becomes a factor that hinders the ultrasonic communication.

Since the portable terminal 10a is not connected to the communication network 90, the portable terminal 10a cannot directly acquire the vehicle parameters to be obtained from the communication network 90.

Thus, the IVI 54 is provided with a transmission function and acquires the noise-related information in the vehicle, especially around the IVI 54 so as to notify the portable terminal 10a of the noise-related information as the environment notification signal ε, because such a noise lowers the communication quality of the control signal Ω.

Specifically, the IVI 54 (70) further includes the functions of a detector 76, a positional information receiver 77, an in-vehicle controller 78, and a sender 79.

The detector 76 receives the noise-related information from the ECU 91 and the various sensors 92 to 96 connected at respective location to the IVI 54 by the communication network 90. The noise-related information to be received by the detector 76 includes the vehicle parameters.

The vehicle parameters are, for example, the traveling speed of the vehicle 100, the traveling acceleration of the vehicle 100, the driving state of the motor, the driving state of the engine, the opening degree of the window 84, and/or air-flow volume of the air conditioner. Further, the vehicle parameters may be other physical quantity which is related to the vehicle 100 and is derived by combining the above-described parameters such as the traveling speed.

The speed or acceleration to be detected by the detector 76 is detected via the vehicle speed sensor 92. The speed and acceleration may be acquired by the positional information receiver 77 via the GPS (Global Positioning System) sensor 96, which is a satellite positioning system.

The detector 76 detects the opening degree of the window 84 via the window sensor 94 for the following reason. When the window 84 is fully opened, the amount of air flowing into the vehicle is large, and it is considered that the disturbance affecting the control signal Ω is also large. Further, the sending device 70 may directly detect the noise, which is actually being generated, through the in-vehicle microphone 72, similarly to the portable terminal 10a so as to include it in the vehicle parameters.

Even in the case where the in-vehicle microphone 72 cannot detect ultrasonic waves, when a special learning method such as machine learning is applied to the detector 76 or the in-vehicle controller 78 for learning how to estimate ultrasonic waves from the operating sound, the detector 76 or the in-vehicle controller 78 can estimate the ultrasonic components with high accuracy by using the existing in-vehicle microphone 72.

The in-vehicle controller 78 is provided in the vehicle 100 and converts the noise-related information in the vehicle 100 into the environment notification signal ε.

At this time, the in-vehicle controller 78 makes the sender 79 send the environment notification signal ε when at least one of the vehicle parameters changes within a predetermined range or changes in a predetermined manner.

For example, regarding the traveling speed of the vehicle 100, the in-vehicle memory 73 holds a plurality of speed zones divided by a plurality of thresholds, as exemplified by the first speed zone indicative of 0 to 30 [km/h], the second speed zone indicative of 30 to 60 [km/h], the third speed zone indicative of 60 to 100 [km/h], and the fourth speed zone indicative of speed faster than 100 [km/h]. The in-vehicle controller 78 sends the environment notification signal ε to the remote controller 10 every time the speed zone of the traveling speed changes.

As the traveling speed of the vehicle 100 increases, the noise to be generated from the driving source and the tires increases, and the noise in the frequency band of the ultrasonic communication also increases. For example, the frequency and intensity of the ultrasonic waves to be generated are different for each driving mode such as when the vehicle 100 is traveling on the coast, when the vehicle 100 is accelerating rapidly, and when the vehicle 100 is traveling electrically. For this reason, the in-vehicle controller 78 sends the updated (i.e., newest or latest) environment notification signal ε in order to make the controller 19 of the portable terminal 10a recalculate the propagability index at the timing when the ultrasonic noise fluctuates.

A provision (i.e., rule or definition) for generating a trigger to send the environment notification signal ε is also provided for each of the vehicle parameters as appropriate.

The trigger to send the environment notification signal ε includes not only change of the section defined on the number line but also the switching of the operation of the vehicle parameter such as "the air outlet has been changed", "the driving mode has been changed", and "the audio has been activated".

The communication form of the noise-related information around the IVI 70 to be sent to the portable terminal 10a may be ultrasonic communication, wireless communication, or infrared communication.

The sending device 70 does not have to be built into the IVI 54. Regarding the location of the sending device 70, as shown in Fig. 4, the sending device 70 may be externally attached to the surface 97a of the IVI 54, may be provided in the peripheral area 97b of the room mirror 85, or may be mounted on the handle 97c, for example.

The respective functions (17 to 20, 76 to 79) of the processing circuitry 15 and 75 of the remote controller 10 and the target in-vehicle devices 51 to 54 can be achieved by hardware processing such as an ASIC (Application Specific Integration Circuit) and an FPGA instead of software processing.

Further, these functions can be achieved by combining software processing and hardware processing.

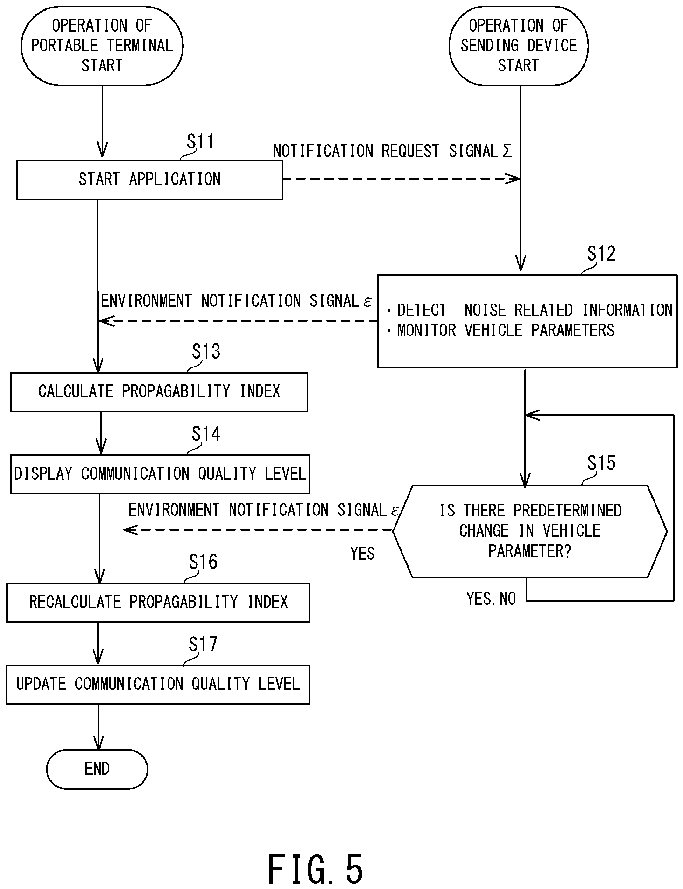

Next, a description will be given of the operation of the remote controller 10 and the sending device 70 according to the first embodiment on the basis of the step number in the flowchart of Fig. 5 by referring to Fig. 1 to Fig. 4 as required.

First, in the step S11, the user 200 starts a remote-control application on the portable terminal 10a in order to remotely control the target in-vehicle devices 51 to 54.

When the remote-control application is started, the operation page 21 for each of the target in-vehicle devices 51 to 54 shown in Fig. 2A and Fig. 2B is displayed on the display screen 26 of the portable terminal 10a.

The transmitter/receiver 17 of the portable terminal 10a transmits the notification request signal Σ so as to notify the sending device 70 that the remote-control application has been started.

Although the flowchart of Fig. 5 illustrates a case of making an environment notification request only when the remote-control application is started, the environment notification request is also executed when the state changes to the other operable state described above.

Next, in the step S12, the detector 76 of the sending device 70 having received the notification request signal Σ detects the noise-related information.

The vehicle parameters are acquired through the communication network 90, and the noise in the vehicle is also acquired by the detector 76 as the noise-related information.

The in-vehicle controller 78 converts the noise-related information in the vehicle 100 into the environment notification signal ε. The in-vehicle sender 79 sends the environment notification signal ε from the speaker 74 toward the portable terminal 10a.

Even after the environment notification signal ε is sent, the vehicle parameters are detected and monitoring is continued.

The information receiver 18 of the portable terminal 10a receives the environment notification signal ε sent by the sending device 70, and acquires the noise-related information that the sending device 70 holds. It is preferred that the information receiver 18 itself acquires the noise sound around the portable terminal 10a as the noise-related information.

Next, the controller 19 calculates the propagability index on the basis of the noise-related information in the step S13.

In some cases, the communication environment is bad and the sending device 70 cannot detect the start (i.e., activation) of the remote-control application. In some cases, the sending device 70 cannot detect the control signal Ω having been sent to the portable terminal 10a. In both of these cases, the portable terminal 10a does not receive the control signal Ω from the sending device 70 even after the remote-control application is started. When the portable terminal 10a does not receive the ultrasonic signal Ω from the sending device 70 within a predetermined time, the portable terminal 10a determines the communication environment to be bad and calculates the propagability index on the basis of this determination.

The controller 19 display the communication quality level on the status bar 27 with the icon 29 on the display 13 in the step S14.

Until there is a predetermined change in at least one of the vehicle parameters (NO in the step S15), the in-vehicle controller 78 continues to monitor the vehicle parameters contained in the noise-related information.

If there is a predetermined change in at least one of the vehicle parameters (YES in the step S15), this detection of the predetermined change works as a trigger, and the in-vehicle controller 78 converts the noise-related information into the environment notification signal ε and sends it to the portable terminal 10.

This is because if there is a change in the vehicle parameter, there is a high possibility that the propagability index changes. The in-vehicle controller 78 continues to monitor the vehicle parameters (YES in the step S15).

The environment notification signal ε sent from the sending device 70 is received by the information receiver 18 of the portable terminal 10a.

In addition, the information receiver 18 itself acquires the noise sound again through the microphone 12 around the portable terminal 10a.

In the step S16, the controller 19 of the portable terminal 10a recalculates the propagability index by using the noise-related information acquired by the information receiver 18.

On the basis of this recalculated propagability index, the controller 19 updates the communication quality level to be displayed on the status bar 27 of the display 13 (in the step S17; END).

When the propagability index is low, it is desirable that the transmitter/receiver 17 transmits the control signal Ω a plurality of times.

As another countermeasure, the control signal Ω can be accurately transmitted to the IVI 54 by transmitting for a longer time or by strengthening the output intensity of the control signal Q.

When the propagability index is low, a notification may be outputted by display or voice to request the user 200 to take a measure to enhance the propagability index. For example, the display 13 may display instruction words such as "Please direct the portable terminal toward the in-vehicle receiver" and/or "Please bring the portable terminal closer to the in-vehicle receiver", as described above.

According to the remote controller 10 of the first embodiment described above, the propagability index is recalculated when a change that affects the communication quality of the control signal Ω occurs in the vehicle interior environment, and thus, the user 200 can check the communication quality level in response to the change in vehicle environment on a real-time basis.

Since the environment notification signal ε is sent at the timing when the portable terminal 10a shifts to the operable state, battery consumption of the portable terminal 10a can be suppressed.

Since the transmission timing of the environment notification signal ε is restricted in this manner, the ultrasonic band can be effectively utilized.

### (Second Embodiment)

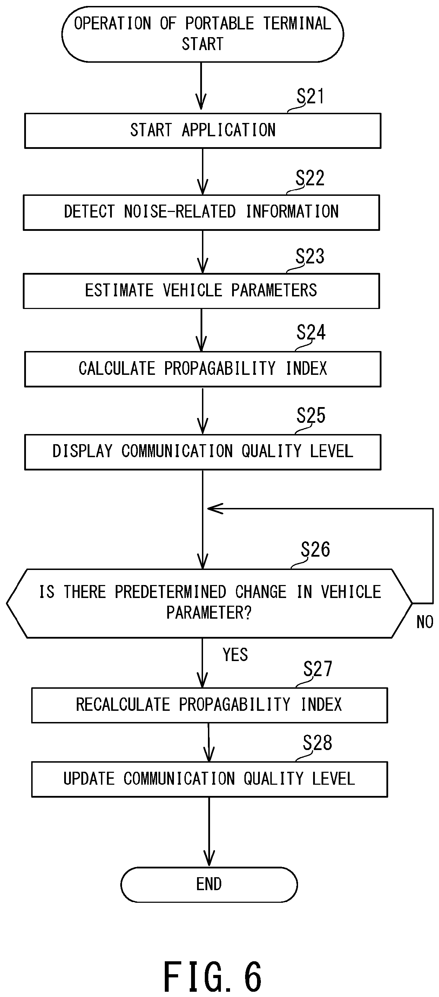

Fig. 6 is a flowchart illustrating the operation of the remote controller 10 according to the second embodiment.

The remote controller 10 according to the second embodiment estimates the vehicle parameters on the basis of the noise-related information acquired from the microphone 12, and monitors the estimated vehicle parameters, i.e., monitors change in vehicle interior environment.

The remote controller 10 uses the estimated vehicle parameters for updating the display of the communication quality level at the timing when the communication environment changes, similarly to the first embodiment.

In the first embodiment, the sending device 70 acquires the vehicle parameters directly from the communication network 90 and monitors their changes.

In the second embodiment, the remote controller 10 determines an appropriate timing of recalculating the propagability index on the basis of the noise-related information acquired by itself and updates the display of the communication quality level. The memory 14 of the remote controller 10 holds data that defines the timing of recalculating the propagability index for the estimated vehicle parameters, similarly to the in-vehicle memory 73 of the first embodiment.

A detailed description will be given of the operation of the remote controller 10 according to the second embodiment on the basis of the step number in the flowchart of Fig. 6 by referring to Fig. 1 to Fig. 4 as required.

First, in order to remotely control the target in-vehicle devices 51 to 54, the user 200 starts the remote-control application on the portable terminal 10a in the step S21.

When the remote-control application is started, the operation page 21 shown in Fig. 2A and Fig. 2B is displayed on the display screen 26 of the portable terminal 10a similarly to the first embodiment.

Next, in response to the change in state of the portable terminal 10a to the operable state (i.e., triggered by change in state of the portable terminal 10a to the operable state), the information receiver 18 detects the noise-related information in the step S22.

At this time, the information receiver 18 detects the noise-related information such as the blowing sound in the vehicle 100 and the operating sound of the devices in the vehicle through the microphone 12 by itself without going through the sending device 70.

Further, the information receiver 18 may determine the moving speed of the portable terminal 10a by the GPS function installed in the portable terminal 10a and then determine the traveling mode of the vehicle 100.

On the basis of this noise-related information, the in-vehicle environment is estimated through the estimation of the vehicle parameters in the step S23.

In the second embodiment, the vehicle parameters such as the opening degree of the window 84 are estimated from the characteristic mechanical sound and its generation direction of the in-vehicle devices. The opening-degree information of the window 84 and the driving state of the air conditioner 51 may be estimated by combining the traveling direction of the vehicle 100 acquired by the GPS function and the generation direction of the noise sound.

Since the outside air flowing into the vehicle and the conditioned air σ by the air conditioner 51 are both characterized by their strength and frequency, machine learning is applied to the controller 19 for learning those characteristics, and thereby, the controller 19 can distinguish and identify the opening degree of the window 84 and the driving state of the air conditioner 51. In particular, when the information receiver 18 learns the obstacle frequency range peculiar to the vehicle 100 in advance, the noise sound that is generated inside the vehicle and seems to be unrelated at first glance can be used for estimating the vehicle parameters.

Afterward, the controller 19 calculates the propagability index and displays the communication quality level on the basis of the calculated propagability index on the display 13 in the steps S24 and S25, similarly to the first embodiment.

Until there is a predetermined change in at least one of the vehicle parameters (NO in the step S26), the controller 19 continues to monitor the vehicle parameters contained in the noise-related information.

If there is a predetermined change in at least one of the vehicle parameters (YES in the step S26), in response to this detection of the predetermined change (i.e., triggered by the detection of the predetermined change), the propagability index is recalculated on the basis of the latest noise-related information in the step S27 and the display of the communication quality level is updated in the step S28 (END), similarly to the first embodiment.

Except that the display of the communication quality level is updated on the basis of change in vehicle parameters acquired and estimated by the portable terminal 10a, the second embodiment is the same as the first embodiment in terms of configuration and operation, and duplicate description is omitted.

According to the remote controller 10 of the second embodiment described above, the remote controller 10 provides the same effects as the first embodiment without coordinating with the sending device 70.

According to the remote controller, the communication-environment sending device, the communication-environment check method, and the communication-environment sending method of at least one embodiment described above, an environmental notification signal is sent when at least one of the vehicle parameters changes within a predetermined range or in a predetermined manner, and thus, communication-quality display that accurately reflects change in communication environment of the ultrasonic communication can be maintained.

## Claims

1. A device (70) configured to send information relating to noise sound in a vehicle (100), the device comprising:
a detector (76) that is provided in the vehicle and acquires information related to noise sound that disturbs ultrasonic communication in the vehicle;
an in-vehicle controller (78) that is provided in the vehicle and converts the information related to noise sound into a notification signal; and
a sender (79) that sends the notification signal to a remote controller disposed in the vehicle,
wherein the in-vehicle controller is configured to make the sender send the notification signal when a vehicle parameter of the vehicle changes within a predetermined range or in a predetermined manner.

2. The device (70) according to claim 1, wherein:
traveling speed of the vehicle (100) is divided into a plurality of speed zones; and
the in-vehicle controller (78) is configured to make the sender send the notification signal each time the traveling speed changes across the plurality of speed zones.

3. The device (70) according to claim 1 or claim 2, wherein the in-vehicle controller (78) is configured to send the notification signal to the remote controller when an operating state of an air conditioner (51) installed in the vehicle (100) changes in a predetermined manner.

4. A remote controller (10) comprising:
a speaker (11) configured to send an ultrasonic signal that controls an operation of an in-vehicle device;
an information receiver (18) configured to detect information related to noise sound that disturbs ultrasonic communication inside a vehicle;
a controller (19) configured to estimate a vehicle parameter on the basis of the information related to noise sound; and, in response to the detection of a predetermined change in the vehicle parameter, the controller is configured to calculate a propagability index of the ultrasonic signal from the information related to noise sound;
a display (13) configured to display the propagability index as communication quality level of the ultrasonic signal.

5. The remote controller (10) according to claim 4, further comprising:
a memory (14) configured to store a provision regarding an operable state,
wherein the controller (19) is configured to calculate the propagability index when the remote controller shifts to the operable state.

6. The remote controller (10) according to claim 5, wherein the operable state is one of: a state in which an operation restriction of the remote controller according to claim 4 is released; a state in which the display is in an on-state, a state in which an application capable of operating the in-vehicle device is started; and a state in which an orientation of the remote controller matches a predetermined orientation.

7. The remote controller (10) according to any of claims 4-6, wherein the memory (14) is configured to hold data that defines the timing of calculating the propagability index for the estimated vehicle parameters.

8. A method that controls an operation of an in-vehicle device by an ultrasonic signal, the method comprising:
receiving information related to noise sound that disturbs ultrasonic communication in a vehicle;
estimating a vehicle parameter on the basis of the information related to noise sound and, in response to detecting a predetermined change in the vehicle parameter,
calculating a propagability index of the ultrasonic signal from the information related to noise sound;
displaying the propagability index as a communication quality level of the ultrasonic signal for controlling an in-vehicle device.

9. A method achieved by cooperating with a remote controller disposed in a vehicle, the method comprising:
acquiring information related to noise sound that disturbs ultrasonic communication in the vehicle;
converting the information related to noise sound into an notification signal; and
sending the notification signal to the remote controller disposed in the vehicle when a vehicle parameter in the vehicle changes within a predetermined range or in a predetermined manner.

## Patentansprüche

1. Vorrichtung (70), die dazu konfiguriert ist, Informationen betreffend die Störgeräusche in einem Fahrzeug (100) zu senden, wobei die Vorrichtung Folgendes umfasst:
einen Detektor (76), der in dem Fahrzeug bereitgestellt ist und die Störgeräusche betreffende Informationen erfasst, welche die Ultraschallkommunikation in dem Fahrzeug stören;
eine fahrzeuginterne Steuerung (78), die in dem Fahrzeug bereitgestellt ist und die Störgeräusche betreffende Informationen in ein Benachrichtigungssignal umwandelt; und
einen Sender (79), der das Benachrichtigungssignal an eine im Fahrzeug angeordnete Fernsteuerung sendet,
wobei die fahrzeuginterne Steuerung dazu konfiguriert ist, den Sender zu veranlassen, das Benachrichtigungssignal zu senden, wenn sich ein Fahrzeugparameter des Fahrzeugs innerhalb eines vorbestimmten Bereichs oder auf eine vorbestimmte Weise ändert.

2. Vorrichtung (70) nach Anspruch 1, wobei:
Fahrgeschwindigkeit des Fahrzeugs (100) in eine Vielzahl von Geschwindigkeitszonen unterteilt ist; und
die fahrzeuginterne Steuerung (78) dazu konfiguriert ist, den Sender zu veranlassen, das Benachrichtigungssignal jedes Mal zu senden, wenn sich die Fahrgeschwindigkeit über die Vielzahl von Geschwindigkeitszonen hinweg ändert.

3. Vorrichtung (70) nach Anspruch 1 oder Anspruch 2, wobei die fahrzeuginterne Steuerung (78) dazu konfiguriert ist, das Benachrichtigungssignal an die Fernsteuerung zu senden, wenn sich ein Betriebszustand einer im Fahrzeug (100) installierten Klimaanlage (51) auf eine vorbestimmte Weise ändert.

4. Fernsteuerung (10), umfassend:
einen Lautsprecher (11), der dazu konfiguriert ist, ein Ultraschallsignal zu senden, das einen Betrieb einer fahrzeuginternen Vorrichtung steuert;
einen Informationsempfänger (18), der dazu konfiguriert ist, Informationen betreffend Störgeräusche, welche die Ultraschallkommunikation im Inneren des Fahrzeugs stören, zu detektieren;
eine Steuerung (19), die dazu konfiguriert ist, einen Fahrzeugparameter auf der Grundlage der die Störgeräusche betreffenden Informationen zu schätzen; und, in Reaktion auf die Detektion einer vorbestimmten Änderung des Fahrzeugparameters, ist die Steuerung dazu konfiguriert, einen Ausbreitungsindex des Ultraschallsignals aus den die Störgeräusche betreffenden Informationen zu berechnen;
eine Anzeige (13), die dazu konfiguriert ist, den Ausbreitbarkeitsindex als Kommunikationsqualitätsniveau des Ultraschallsignals anzuzeigen.

5. Fernsteuerung (10) nach Anspruch 4, ferner umfassend:
einen Speicher (14), der dazu konfiguriert ist, eine Bestimmung über einen Betriebsfähigkeitszustand zu speichern,
wobei die Steuerung (19) dazu konfiguriert ist, den Ausbreitungsindex zu berechnen, wenn die Fernsteuerung in den Betriebsfähigkeitszustand übergeht.

6. Fernbedienung (10) nach Anspruch 5, wobei der Betriebsfähigkeitszustand einer der Folgenden ist: ein Zustand, in dem eine Betriebsbeschränkung der Fernbedienung nach Anspruch 4 aufgehoben wird; ein Zustand, in dem sich die Anzeige in einem eingeschalteten Zustand befindet; ein Zustand, in dem eine Anwendung, die in der Lage ist, die fahrzeuginterne Vorrichtung zu betreiben, gestartet ist; und ein Zustand, in dem eine Ausrichtung der Fernbedienung einer vorbestimmten Ausrichtung entspricht.

7. Fernsteuerung (10) nach einem der Ansprüche 4-6, wobei der Speicher (14) dazu konfiguriert ist, Daten zu enthalten, die den Zeitpunkt der Berechnung des Ausbreitungsindexes für die geschätzten Fahrzeugparameter definieren.

8. Ein Verfahren, das den Betrieb eines Fahrzeuggerätes durch ein Ultraschallsignal steuert, wobei das Verfahren Folgendes umfasst:
Empfangen von Störgeräusche betreffenden Informationen, welche die Ultraschallkommunikation im Inneren des Fahrzeugs stören;
Schätzen eines Fahrzeugparameters auf der Grundlage der Informationen betreffend die Störgeräusche und, als Reaktion auf die Detektion einer vorbestimmten Änderung des Fahrzeugparameters,
Berechnen eines Ausbreitbarkeitsindex des Ultraschallsignals aus den Störgeräusche betreffenden Informationen;
Anzeigen des Ausbreitbarkeitsindex als Kommunikationsqualitätsniveau des Ultraschallsignals zum Steuern einer fahrzeuginternen Vorrichtung.

9. Verfahren, das durch die Zusammenarbeit mit einer in einem Fahrzeug angeordneten Fernsteuerung erreicht wird, wobei das Verfahren Folgendes umfasst:
Erfassen von Störgeräusche betreffenden Informationen, welche die Ultraschallkommunikation im Fahrzeug stören;
Umwandlung der die Störgeräusche betreffenden Informationen in ein Benachrichtigungssignal; und
Senden des Benachrichtigungssignals an die in dem Fahrzeug angeordnete Fernsteuerung, wenn sich ein Fahrzeugparameter in dem Fahrzeug innerhalb eines vorbestimmten Bereichs oder auf eine vorbestimmte Weise ändert.

## Revendications

1. Dispositif (70) configuré pour envoyer des informations relatives au bruit dans un véhicule (100), le dispositif comprenant :
un détecteur (76) qui est prévu dans le véhicule et qui acquiert des informations relatives au bruit qui perturbe la communication ultrasonore dans le véhicule ;
un dispositif de commande embarqué (78) qui est prévu dans le véhicule et convertit les informations relatives au bruit en un signal de notification ; et
un émetteur (79) qui envoie le signal de notification à une commande à distance disposée dans le véhicule,
dans lequel le dispositif de commande embarqué est configuré pour amener l'émetteur à envoyer le signal de notification lorsqu'un paramètre de véhicule du véhicule change dans une plage prédéterminée ou d'une manière prédéterminée.

2. Dispositif (70) selon la revendication 1, dans lequel :
la vitesse de déplacement du véhicule (100) est divisée en une pluralité de zones de vitesse ; et
le dispositif de commande embarqué (78) est configuré pour amener l'émetteur à envoyer le signal de notification chaque fois que la vitesse de déplacement change dans la pluralité de zones de vitesse.

3. Dispositif (70) selon la revendication 1 ou la revendication 2, dans lequel le dispositif de commande embarqué (78) est configuré pour envoyer le signal de notification à la commande à distance lorsqu'un état de fonctionnement d'un climatiseur (51) installé dans le véhicule (100) change d'une manière prédéterminée.

4. Commande à distance (10) comprenant :
un haut-parleur (11) configuré pour envoyer un signal ultrasonore qui commande une opération d'un dispositif embarqué ;
un récepteur d'informations (18) configuré pour détecter des informations relatives au bruit qui perturbe la communication ultrasonore à l'intérieur d'un véhicule ;
un dispositif de commande (19) configuré pour estimer un paramètre de véhicule sur la base des informations relatives au bruit ; et, en réponse à la détection d'un changement prédéterminé dans le paramètre de véhicule, le dispositif de commande est configuré pour calculer un indice de propagabilité du signal ultrasonore à partir des informations relatives au bruit ;
un écran (13) configuré pour afficher l'indice de propagation en tant que niveau de qualité de communication du signal ultrasonore.

5. Commande à distance (10) selon la revendication 4, comprenant également :
une mémoire (14) configurée pour stocker une disposition concernant un état opérationnel,
dans lequel le dispositif de commande (19) est configuré pour calculer l'indice de propagabilité lorsque la commande à distance passe à l'état opérationnel.

6. Commande à distance (10) selon la revendication 5, dans laquelle l'état opérationnel est l'un des suivants : un état dans lequel une restriction de fonctionnement de la commande à distance selon la revendication 4 est levée ; un état dans lequel l'écran est allumé, un état dans lequel une application capable de faire fonctionner le dispositif embarqué est démarrée ; et un état dans lequel une orientation de la commande à distance correspond à une orientation prédéterminée.

7. Commande à distance (10) selon l'une quelconque des revendications 4 à 6, dans laquelle la mémoire (14) est configurée pour contenir des données qui définissent le moment de calcul de l'indice de propagabilité pour les paramètres de véhicule estimés.

8. Procédé qui commande une opération d'un dispositif embarqué par un signal ultrasonore, le procédé comprenant :
la réception d'informations relatives au bruit qui perturbe la communication ultrasonore dans un véhicule ;
l'estimation d'un paramètre de véhicule sur la base des informations relatives au bruit et, en réponse à la détection d'un changement prédéterminé dans le paramètre de véhicule,
le calcul d'un indice de propagation du signal ultrasonore à partir des informations relatives au bruit ;
l'affichage de l'indice de propagation en tant que niveau de qualité de communication du signal ultrasonore pour commander un dispositif embarqué.

9. Procédé réalisé en coopérant avec une commande à distance disposée dans un véhicule, le procédé comprenant :
l'acquisition d'informations relatives au bruit qui perturbe la communication ultrasonore dans le véhicule ;
la conversion des informations relatives au bruit en un signal de notification ; et
l'envoi du signal de notification à la commande à distance disposée dans le véhicule lorsqu'un paramètre de véhicule dans le véhicule change dans une plage prédéterminée ou d'une manière prédéterminée.
